Europäisches Patentamt

European Patent Office

Office européen des brevets

(19)

(11) Publication number: **0 112 159**
**B1**

(12) **EUROPEAN PATENT SPECIFICATION**

(45) Date of publication of patent specification: **30.09.87**

(51) Int. Cl.⁴: **C 01 G 25/00**

(21) Application number: **83307586.4**

(22) Date of filing: **13.12.83**

(54) Methods of manufacturing a fine powder of barium zirconate.

(30) Priority: **15.12.82 JP 219540/82**

(43) Date of publication of application:
**27.06.84 Bulletin 84/26**

(45) Publication of the grant of the patent:
**30.09.87 Bulletin 87/40**

(84) Designated Contracting States:
**DE FR GB NL**

(56) References cited:
**US-A-4 374 117**
**CHEMICAL ABSTRACTS, vol. 91, no. 7, 13th August 1979, page 283, no. 61660r, Columbus, Ohio, USA; L.V. VOLOD'KO et al.: "Low-temperature method for preparing some complex oxide materials"**
**ZEITSCHRIFT FÜR ANORGANISCHE UND ALLGEMEINE CHEMIE, vol. 362, October 1968, pages 149-168, Leipzig, DE; R. SCHOLDER et al.: "Über Zirkonate, Hafnate und Thorate von Barium, Strontium, Lithium und Natrium"**
**CHEMICAL ABSTRACTS, vol. 64, no. 7, 1966, column 9210g, Columbus, Ohio, USA; YU.M. GALKIN et al.: "Preparation of strontium and barium zirconates under hydrothermal conditions"**
(73) Proprietor: **SONY CORPORATION**
**7-35 Kitashinagawa 6-Chome Shinagawa-ku Tokyo 141 (JP)**

(72) Inventor: **Uedaira, Satoru c/o Patent Division Sony Corporation 7-35 Kitashinagawa-6 Shinagawa-ku Tokyo (JP)**
Inventor: **Suzuki, Masayuki c/o Patent Division Sony Corporation 7-35 Kitashinagawa-6 Shinagawa-ku Tokyo (JP)**
Inventor: **Yamanoi, Hiroshi c/o Patent Division Sony Corporation 7-35 Kitashinagawa-6 Shinagawa-ku Tokyo (JP)**
Inventor: **Tamura, Hidemasa c/o Patent Division Sony Corporation 7-35 Kitashinagawa-6 Shinagawa-ku Tokyo (JP)**

(74) Representative: **Thomas, Christopher Hugo et al D Young & Co 10 Staple Inn London WC1V 7RD (GB)**

Courier Press, Leamington Spa, England.

## Description

The invention relates to methods of manufacturing a fine powder of barium zirconate, $BaZrO_3$.

In recent years, manufacture of super fine powder or particles of $BaZrO_3$ has been required, for example, for multilayer ceramics such as capacitors which are required to be small in size and light in weight, like other electronic parts, while having high capacitance. For this purpose, multilayer ceramic capacitors using $BaZrO_3$ as a dielectric material have been proposed. In order to provide a thin and uniform layer of the material, formation of a super fine powder of $BaZrO_3$ is necessary. For the manufacture of a multilayer ceramic capacitor, lead is normally incorporated so as to improve the firing properties and temperature characteristics. If too high a firing temperature is used, part of the lead is evaporated. Thus it becomes difficult to obtain a multilayer ceramic capacitor of uniform characteristics. However, a finer powder of $BaZrO_3$ permits lower firing temperatures.

Super fine powder of $BaZrO_3$ is also required as an electrostrictive or piezoelectric material, to give improved characteristics. Super fine powder of $BaZrO_3$ is also effective for use as a transparent ceramic material. This is because, as described above, if the powder size is smaller and more uniform, lower firing temperatures can be expected.

It has been the usual practice to manufacture $BaZrO_3$ by solid phase reaction. In this reaction, barium carbonate ($BaCO_3$) and zirconium oxide, both in powder form, are mixed in a ball mill and subjected to a solid phase reaction at a temperature of 1400 to 1500°C. Thereafter, the powder size is relatively large and is not uniform. In addition, $BaZrO_3$ is as hard as aluminium oxide, so it takes a long time to mill in a ball mill, which leads to the undesirable incorporation of impurities.

In recent years, attempts have been made to prepare fine powder of $BaZrO_3$ from metal alkoxides. However, this method is expensive and has not been used in practice yet.

Zeitschrift für anorganische und allegemeine Chemie, vol. 362, October 1968, pages 149—168, R. Scholder et al, Über Zirkonate, Hafnate und Thorate von Barium, Strontium, Lithium und Natrium', discloses the preparation of a powder of barium zirconate, wherein a solution of $ZrOCl_2$ is added to a boiling alkaline solution of $Ba(OH)_2$. The reaction mixture thus obtained is refluxed for forty-eight to sixty-eight hours. The concentrations of $Ba(OH)_2$ (7.2% to 14.6%) employed is such that the pH in the solution is below 13.6.

According to the present invention there is provided a method of manufacturing fine powder of barium zirconate, comprising the steps of: hydrolyzing a zirconium compound; and

reacting the hydrolyzed compound with a water-soluble barium compound in an aqueous alkaline solution, at a temperature not less than 90°C wherein

the reaction between the hydrolyzed zirconium compound and the water-soluble barium compound is effected with a Ba to Zr molar ratio not less than 0.7:1; and

alkali is added to produce a pH of not less than 13.6.

By using methods according to the invention a very fine powder of $BaZrO_3$ can be obtained simply and inexpensively.

The invention will now be described by way of example with reference to the accompanying drawings, in which:

Figure 1 is an X-ray diffraction pattern of a fine powder of $BaZrO_3$ manufactured by a method according to the invention;

Figure 2 is a photograph by a scanning electron microscope of a fine powder of $BaZrO_3$ made by a method according to the invention;

Figure 3 is a graph showing the results of thermogravimetric analysis of a fine powder of $BaZrO_3$ made by a method according to the invention;

Figure 4 is a graph showing pH dependence of the formation of a fine powder of $BaZrO_3$;

Figure 5 is a graph showing Ba/Zr molar ratio dependence of the formation of a fine powder of $BaZrO_3$;

Figure 6 is a graph showing reaction temperature dependence of the formation of a fine powder of $BaZrO_3$; and

Figure 7 is a graph showing reaction time dependence of the formation of a fine powder of $BaZrO_3$.

Zr compounds hydrolyzed in the first step of the method according to the invention should be soluble in water and include, for example $ZrCl_4$, $ZrOCl_2.H_2O$, $Zr(NO_3)_2.2H_2O$, $Zr(SO_4)_2$ and $ZrO.SO_4$. For the hydrolysis, an aqueous solution of a zirconium compound such as $ZrCl_4$ is prepared, to which is added an alkaline substance such as $NH_4OH$, NaOH, KOH or LiOH to render the pH neutral. As a result, $ZrO_2.xH_2O$ is formed. Where $Zr(SO_4)_2$ or $ZrO.SO_4$ is used, the hydrolyzed product should preferably be washed with water in order to remove the sulphate group therefrom, and the $ZrO_2.xH_2O$ is collected by filtration.

Subsequently, water-soluble Ba compounds are provided and reacted with the hydrolyzate in an aqueous solution of strong alkali. If the removal of the sulphate group in the hydrolysis reaction is not necessary, the reaction in the aqueous strongly alkaline solution may be effected simultaneously with the hydrolysis.

Examples of the water-soluble Ba compound include BaO, $Ba(OH)_2$, $Ba(OH)_2.8H_2O$, $BaCl_2$, $Ba(NO_3)_2$, $Ba(CH_3COO)_2$ and $Ba(ClO_3)_2.2H_2O$. The alkalis used in the form of an aqueous solution include, for example, LiOH, KOH, NaOH or $NH_4OH$.

The pH of the aqueous strongly alkaline solution should be not less than 13.6, preferably not less than 13.7. In the reaction between the hydrolyzate and a Ba compound, the Ba/Zr molar ratio should be not less than 0.7:1, preferably 0.9 to 10:1. The reaction temperature is in the range of from 90°C to the boiling point, preferably over 92°C. The reaction time should be sufficient to cause the reaction to proceed. For instance, it is two hours or more, preferably three hours or more.

After completion of the reaction, the reaction system may be filtered, washed with water and dried, if necessary.

Using a method according to the invention, a powder of $BaZrO_3$ having a size as small as 2 to 3 µm can be obtained, the powder being spherical in shape and uniform. The $BaZrO_3$ powder obtained is highly active. For the preparation of $BaZrO_3$ powder by known solid phase reaction, the product is mechanically milled or powdered, so that a uniform and small powder size cannot be expected. Where a fine powder of $BaZrO_3$ obtained by a method according to the invention is used in a multilayer ceramic capacitor, sintering temperatures can be lowered sufficiently for lead to be uniformly contained in the layer. In this way characteristic scatter can be reduced. Use of the fine powder of $BaZrO_3$ results in a large dielectric constant at a normal temperature. The fine powder is also very suitable for use as an electrostrictive, piezoelectric or transparent ceramic material.

As all the starting materials are inorganic materials, the production cost of the $BaZrO_3$ powder can be reduced to a low level.

The method does not need the milling step required in the known method using solid phase reaction, so there is little or no incorporation of impurities.

The $BaZrO_3$ powder obtained is cubic in crystal form ($a_o=4.215\times10^{-10}$ m).

The invention will now be described in more detail by way of examples.

Example 1
55.74 g of $ZrCl_4$ was dissolved in water to make 500 ml of an aqueous solution. 40 ml of the solution was taken, in which was dissolved 5.001 g of $Ba(NO_3)_2$ so that the molar ratio of $Ba^{+2}/Zr^{+4}$ was unity. Thereafter, KOH was added to the solution to adjust the pH to 14, whereupon the solution became an opaque suspension. The suspension was heated for reaction at 100°C for seven hours while agitating. The resulting white precipitate was repeatedly washed by decantation with hot water to remove impurities such as alkali ions, followed by separation by filtration and drying in a dryer at 90°C.

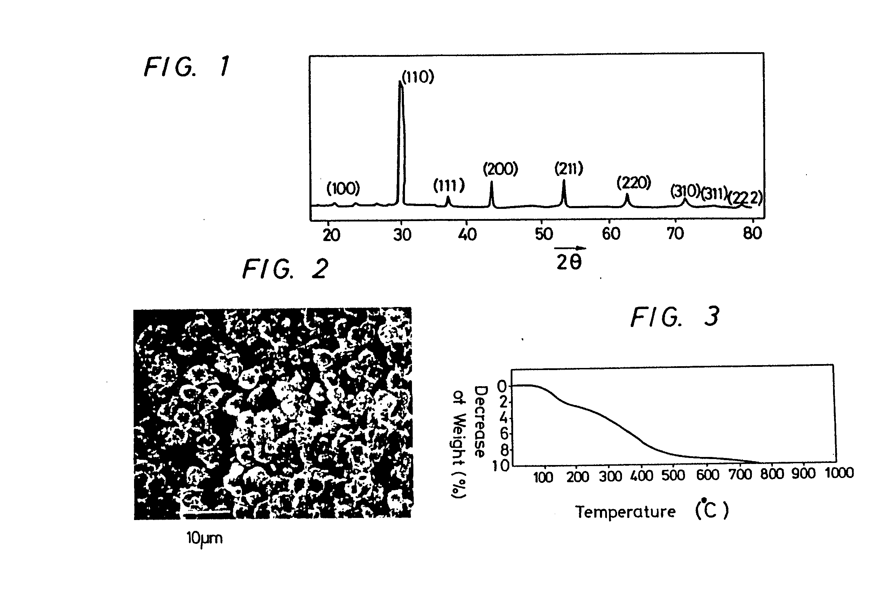

The product was subjected to X-ray diffraction analysis giving a diffraction pattern shown in Figure 1. This pattern was compared with ASTM card (6-0399) to determine the product as $BaZrO_3$ of cubic perovskite structure. The X-ray diffraction was carried out by a powder method using a copper target, a nickel filter and a time constant of unity. As is shown in a scanning electron microscope photograph in Figure 2, the powder of $BaZrO_3$ had a uniform size of 2 to 3 µm. The powder was in spherical form.

Moreover, the fine powder of $BaZrO_3$ obtained in this example was subjected to thermogravimetric analysis. The results are shown in Figure 3, from which it will become apparent that the fine powder of $BaZrO_3$ contains no impurities. The gradual weight loss is considered to result from the removal of adsorbed water.

Example 2
82.55 g of $ZrOCl_2.8H_2O$ was dissolved in water to make 500 ml of a solution. 40 ml of the solution was taken, to which was added 6.465 g of $Ba(OH)_2.8H_2O$ so that the molar ratio of Ba/Zr was unity. In this case, the mixture became opaque because it was not strongly acidic as in Example 1. The suspension was adjusted in pH to 14 by the use of NaOH and agitated for reaction for seven hours while boiling. The reaction system was subjected to decantation, filtration and drying in the same manner as in Example 1, thereby obtaining a fine powder of $BaZrO_3$.

The fine powder was subjected to X-ray diffraction in the same manner as in Example 1, giving a diffraction pattern similar to the pattern of Figure 1. The results of the scanning electron microscopic observation were similar to those of Figure 2.

Example 3
55.74 g of $ZrCl_4$ was dissolved in water to make 500 ml of a solution. 40 ml of the solution was taken, to which was added a LiOH solution for hydrolysis so that the pH became 7. A white suspension resulted to which was added 9.054 g of $Ba(OH)_2.8H_2O$ (Ba/Zr=1.5), followed by further LiOH for adjustment of the pH to 14. The mixture was reacted at 90°C for eight hours, followed by decantation, filtration and drying in the same manner as in Example 1.

The resulting powder was subjected to X-ray diffraction analysis, a diffraction pattern similar to the pattern of Figure 1 being obtained. The results of observation by the scanning electron microscope were similar to those of Figure 2.

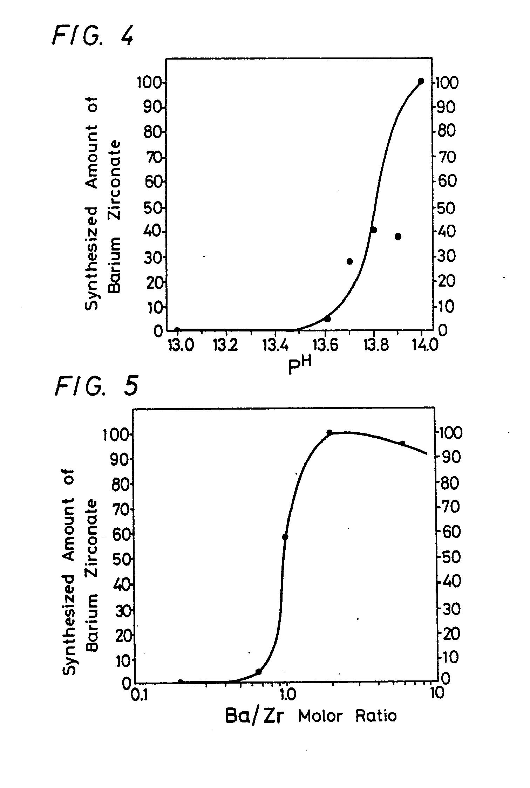

Example 4
In this example, the dependence on pH of the amount of $BaZrO_3$ produced was determined. The procedure of Example 1 using a reaction temperature of 100°C, a Ba/Zr molar ratio of unity and a reaction time of seven hours was repeated, except that the pH was varied. Under these conditions, the amount of $BaZrO_3$ was determined. The results are shown in Figure 4. From the figure, it will be seen that the pH should not be lower than 13.6, preferably not lower than 13.7. It will be noted that the amount of $BaZrO_3$ produced was calculated from an area of the X-ray diffraction peak (110) of the cubic perovskite structure. The X-ray diffraction analysis was conducted under similar conditions indicated before, using a copper target, a cobalt filter, 35 KV, 25 mA and a time constant of unity.

Example 5
In this example, the dependence on molar ratio of the amount of $BaZrO_3$ produced was determined.

The procedure of Example 1 was repeated except that the molar ratio of Ba/Zr was varied, thereby producing BaZrO₃. The amount of BaZrO₃ produced is shown in Figure 5 in relation to the molar ratio. From the figure, it will be seen that the Ba/Zr molar ratio should not be smaller than 0.7:1, preferably 0.9 to 10:1. The amount of BaZrO₃ was determined in the same manner as in Example 4.

Example 6

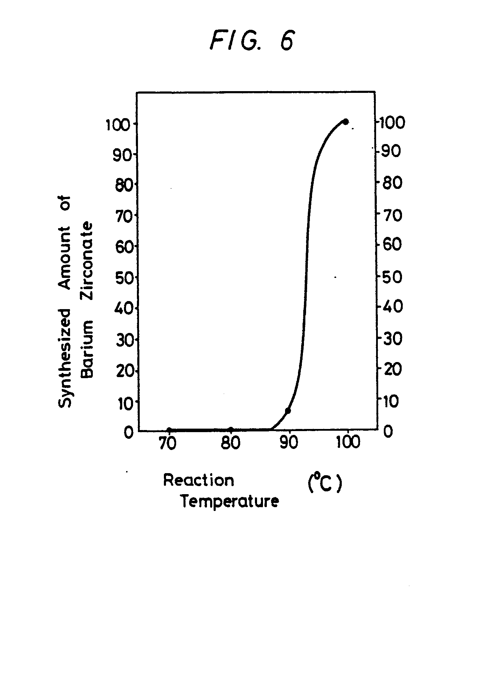

In this example, the dependence on temperature of the amount of BaZrO₃ produced was determined. The procedure of Example 1 was repeated except that the reaction temperature was varied. The amount of BaZrO₃ produced is shown in Figure 6. The results of the figure reveal that the reaction temperature should not be lower than 90°C, preferably not lower than 92°C. The amount of BaZrO₃ was determined in the same manner as in Example 4.

Example 7

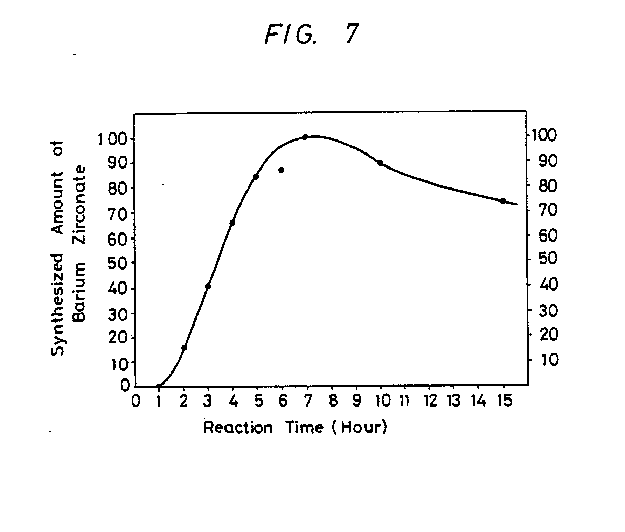

In this example, the dependence on reaction time of the amount of BaZrO₃ produced was determined. The general procedure of Example 1 was repeated except that the reaction time was varied. The amount of BaZrO₃ produced is as shown in Figure 7. From the figure, it will be seen that the reaction time should not be less than two hours, preferably not less than three hours.

**Claims**

1. A method of manufacturing fine powder of barium zirconate, comprising the steps of:
   hydrolyzing a zirconium compound; and
   reacting the hydrolyzed compound with a water-soluble barium compound in an aqueous alkaline solution at a temperature not less than 90°C wherein
   the reaction between the hydrolyzed zirconium compound and the water-soluble barium compound is effected with a Ba to Zr molar ratio not less than 0.7:1; and
   alkali is added to produce a pH of not less than 13.6.

2. A method according to claim 1 wherein said pH is not less than 13.7.

3. A method according to claim 2 wherein said molar ratio is in the range of 0.9 to 10:1.

4. A method according to claim 1 wherein the temperature is in the range of 92°C to the boiling point of the reaction system.

5. A method according to any one of the preceding claims wherein said zirconium compound is $ZrCl_4$, $ZrOCl_2 \cdot 8H_2O$, $Zr(NO_3)_4$, $ZrO(NO_3)_2 \cdot 2H_2O$, $Zr(SO_4)_2$ or $ZrOSO_4$.

6. A method according to any one of the preceding claims wherein said barium compound is $BaO$, $Ba(OH)_2$, $Ba(OH)_2 \cdot 8H_2O$, $BaCl_2$, $Ba(NO_3)_2$, $Ba(CH_3COO)_2$ or $Ba(ClO_3)_2 \cdot 2H_2O$.

**Patentansprüche**

1. Verfahren zur Herstellung von feinem pulverigen Barium-zirkonat, mit Schritten zum
   Hydrolisieren einer Zirkonium-Verbindung und
   Reagierenlassen der hydrolisierten Verbindung mit einer wasserlöslichen Barium-Verbindung in einer wässerigen alkalischen Lösung bei einer Temperatur von nicht weniger als 90°C, wobei
   die Reaktion zwischen der hydrolisierten Zirkonium-Verbindung und der wasserlöslichen Barium-Verbindung mit einem Ba-zu-Zr-Molverhältnis von nicht weniger als 0.7:1 bewirkt wird und
   Alkali zugesetzt wird, um einen pH-Wert zu erzeugen, der nicht weniger als 13.6 beträgt.

2. Verfahren nach Anspruch 1, bei dem der pH-Wert nicht kleiner als 13,7 ist.

3. Verfahren nach Anspruch 2, bei dem das Molverhältnis in dem Bereich von 0,9 bis 10:1 liegt.

4. Verfahren nach Anspruch 1, bei dem die Temperatur in dem Bereich von 92°C bis zum Siedepunkt des Reaktionssystems liegt.

5. Verfahren nach einem der vorhergehenden Ansprüche, bei dem die Zirkonium-Verbindung $ZrCl_4$, $ZrOCl_2 \cdot 8H_2O$, $Zr(NO_3)_4$, $ZrO(NO_3)_2 \cdot 2H_2O$, $Zr(SO_4)_2$ oder $ZrOSO_4$ ist.

6. Verfahren nach einem der vorhergehenden Ansprüche, bei dem die Barium-Verbindung $BaO$, $Ba(OH)_2$, $Ba(OH)_2 \cdot 8H_2O$, $BaCl_2$, $Ba(NO_3)_2$, $Ba(CH_3COO)_2$ oder $Ba(ClO_3)_2 \cdot 2H_2O$ ist.

**Revendications**

1. Un procédé de fabrication d'une poudre fine de zirconate de baryum comprenant les étapes suivantes:
   hydrolyse d'un composé de zirconium; et
   réaction du composé hydrolysé avec un composé de baryum soluble dans l'eau dans une solution aqueuse alcaline à une température de pas moins de 90°C,
   dans lequel la réaction entre le composé de zirconium hydrolysé et le composé de baryum soluble dans l'eau est effectuée avec un rapport molaire Bo/Zr de pas moins de 0,7:1 et on ajoute un alcali pour produire un pH de pas moins de 13,6.

2. Un procédé selon la revendication 1, dans lequel ledit pH n'est pas inférieur à 13,7.

3. Un procédé selon la revendication 2, dans lequel ledit rapport molaire est dans la gamme de 0,9 à 10:1.

4. Un procédé selon la revendication 1, dans lequel la température est dans la gamme de 92°C au point d'ébullition du système de réaction.

5. Un procédé selon l'une quelconque des revendications précédentes dans lequel ledit composé de zirconium est $ZrCl_4$, $ZrOCl_2 \cdot 8H_2O$, $Zr(NO_3)_4$, $ZrO(NO_3)_2 \cdot 2H_2O$, $Zr(SO_4)_2$ ou $ZrOSO_4$.

6. Un procédé selon l'une quelconque des revendications précédentes, dans lequel ledit composé de baryum est $BaO$, $Ba(OH)_2$, $Ba(OH)_2 \cdot 8H_2O$, $BaCl_2$, $Ba(NO_3)_2$, $Ba(CH_3COO)_2$ ou $Ba(ClO_3)_2 \cdot 2H_2O$.

FIG. 1

(110)

(100)    (111)    (200)    (211)    (220)    (310)(311)(222)

20    30    40    50    60    70    80

$\overrightarrow{2\theta}$

FIG. 2

10μm

FIG. 3

Decrease of Weight (%)

0
2
4
6
8
10

100 200 300 400 500 600 700 800 900 1000

Temperature (°C)

*FIG. 4*

*FIG. 5*

## FIG. 6

## FIG. 7